# EUROPEAN PATENT APPLICATION

(11) **EP 3 981 555 A1**
(43) Date of publication of application: **13.04.2022**
(21) Application number: 20200981.7
(22) Date of filing: 09.10.2020
(51) Int. Cl.: B25J 15/06

(54) **GRIPPING DEVICE FOR POROUS MATERIALS**

(71) Applicant: Automation, Press and Tooling, A.P. & T AB, 514 32 Tranemo (SE)
(72) Inventor: Johansson, Roger, 523 75 Dalum (SE)
(74) Representative: AWA Sweden AB

(57) **Abstract**

The present invention relates to a gripping device (100) for gripping a material (160) and a method for gripping a material. The gripping device comprises a gripper chamber (102) having a gripper opening (106) configured to face the material when in use, and a valve opening (122), a grating (108) covering at least a portion of the gripper opening, a valve (120) arranged at or in fluid connection with the valve opening of the gripper chamber. The gripper chamber comprises connections to a pressure source (142) configured to provide a source underpressure and to a surrounding environment (142) having a surrounding pressure. The valve is configured to, in an open state, connect the valve opening to the surrounding environment, and in a gripping state, connect to the valve opening to the pressure source.

## Description

### Technical Field

The present disclosure relates to a handling device and method for porous materials, and especially to an arrangement related to handling, safely gripping, transporting, and releasing of very porous and air-permeable materials like fibrous materials in handling robots in industrial production lines by a gripping device which uses reduced pressure for gripping.

### Background

Handling of porous and air-permeable materials and in automated industrial processes is a common problem. Since porous materials are fragile and may fall apart when trying to move them they need to be handled very carefully.

The known technical solutions to handling of porous and air-permeable material all exhibit certain disadvantages. By using a needle gripper there is an increased risk that the fragile material breaks apart and thereby being involuntarily released from the gripper. Similar problems are observed for claw grippers as the pressure applied to the porous material leads to the compression and destruction of the material.

Other solutions based on gluing or freezing of the material to a transport arm have further disadvantages e.g. only being able to lift part of the material and having problems of keeping the material intact when releasing.

Further, gripping of porous material can be approached by the use of suction cups. However, suction cups are prone to sucking in the material and thereby clogging the suction cup. Additionally, suction cups exhibit the problem that very porous material and air-permeable material does not properly attach to the suction cup as too much air can flow through the material itself.

Further, use of low pressure cyclons leads to the uncontrolled spreading of the porous material.

Thus, there is a need for a device which can safely grip, transport, and release of very porous and air-permeable without harming the integrity of the material. Further, the device and method needs to cost effectively adaptable for use in industrial production lines.

### Summary

It is an object of the present invention to provide an improved solution that alleviates the mentioned drawbacks with present devices. Furthermore, it is an object to provide a gripping device and method to safely grip, transport and release porous and air-permeable materials in industrial production lines.

According to a first aspect, there is provided a gripping device for gripping a material. The gripping device comprises a gripper chamber having a gripper opening configured to face the material when in use, and a valve opening, a grating covering at least a portion of the gripper opening, a valve arranged at or in fluid connection with the valve opening of the gripper chamber. The gripper chamber comprises connections to a pressure source having a source underpressure (i.e. negative pressure) and to a surrounding environment having a surrounding pressure. The valve is configured to, in an open state, connect the valve opening to the surrounding environment, and in a gripping state, connect to the valve opening to the pressure source.

Due to the pressure difference between the surrounding presssure and the source pressure the device can safely grip and release the material.

The term surrounding environment refers to the gas atmosphere in which the device is placed. The surrounding environment may include combinations of different gas compositions and pressures, preferably air at normal pressure.

The valve allows to quickly obtain the desired source pressure in the distribution member. The valve may have a gripping state and an open state. The valve may be configured for a fast change between the states. The valve may move linearly between the two states to open and close the valve. The valve may for instance be electrically, pneumatically or hydraulically driven. The source pressure may be obtained in the gripping chamber at the within a short period when the valve changes state, thereby facilitating a safe and reliable gripping and release of the material.

The source pressure is in one embodiment lower than the surrounding pressure in the gripper chamber. A pressure difference may be defined as the difference in pressure between the source pressure and the surrounding pressure. In one embodiment, the pressure difference is above 0, but less than 0.5 bar. In other embodiments, the pressure difference may be less than 200 mbar, less than 100 mbar, less than 50 mbar or less than 10 mbar. Further, the source pressure may be provided continuously by the pressure source throughout the gripping of the material. A combination of a low pressure difference and a continuous source underpressure may provide that also very porous and fragile materials may be gripped in a safe manner without damaging the material. The pressure difference may be selected dependent on the porosity of the material.

The valve may be arranged at or in fluid connection with the valve opening of the gripper chamber. The gripper chamber may further comprise a connection to a second pressure source having a second source pressure, wherein the valve may be configured to, in a cleaning state, connect to the valve opening to the second pressure source, and wherein the distribution member may further be configured to distribute the second source pressure in the gripper chamber along the gripper opening wherein the second source pressure is higher than the surrounding pressure in the gripper chamber. In case that material attaches to the grating the second source pressure and be used to expel such material and hence clean the grating.

The material being gripped may be a porous material and/ or air-permeable. The materials can be porous and air-permeable /gas-permeable and are e.g. fibre material such as wooden fibres. These materials are typically fragile and fall apart when higher physical pressure is applied. The term porosity is defined as the ratio of the volume of pores to the volume of solid material and is expressed as a percentage. The term air- permeable is defined as the rate of airflow passing through a known area under a prescribed air pressure differential between the two surfaces of a material. The material being gripped may be a fibrous material.

The pressure source may generate the source underpressure by use of a fan, vacuum source, roughing pump, or other underpressure source. The pressure obtained by the pressure source may be between minus 5-500 mbar, preferably between minus 5-100 mbar, more preferably between minus 5-20 mbar. The underpressure may be provided in a continuous manner by the pressure source. The source pressure can be adapted to the porosity of the material.

In one embodiment, the gripping device may comprise a distribution member arranged in the gripper chamber and configured to distribute a pressure in the gripper chamber along the gripper opening. The distribution member may be configured to provide homogenous pressure over at least an area of the grating. The distribution member may have a dome shape. In some embodiments, the distribution member may be a dome shaped circular or rectangular plate. The distribution member may be arranged coaxially with the valve opening of the gripping chamber.

The grating may be covering at least 50% of the gripper opening, preferably at least 70% of the gripper opening, or more preferably at least 90% or 99% of the gripper opening. In one embodiment, the grating may cover the entire gripper opening. The grating may be formed by a wire mesh or metal plate with holes. The grating may have a porosity of 25-99%. The porosity of the grating may be adapted to different common materials. The valve opening may be positioned in direct connection to the gripping chamber.

According to a second aspect, there is provided a method for gripping a material, the method comprising: providing a gripping device having a gripper opening configured to face the material, bringing the gripper opening in contact with the material for gripping the material, changing state of a valve arranged at or in fluid connection with a valve opening of a gripper chamber from an open state to a gripping state, in which gripping state the valve is connected to a pressure source having a source underpressure, distributing the source pressure in the gripper chamber along the gripper opening using a distribution member arranged in the gripper chamber. The gripping device provided in the method may be a gripping device according to any of the embodiments described above.

The here disclosed device and method are applicable for automated industrial processes, such as robot handling.

The invention is defined by the appended independent claims, with embodiments being set forth in the appended dependent claims, in the following description and in the drawings.

### Brief Description of the Drawings

The invention will in the following be described in more detail with reference to the enclosed drawings, wherein:
Fig. 1a-c are schematic cross-sectional views of the gripping device according to an embodiment of the invention.
Fig. 2 is a schematic bottom view of the grating according to an embodiment of the invention.

### Description of Embodiments

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

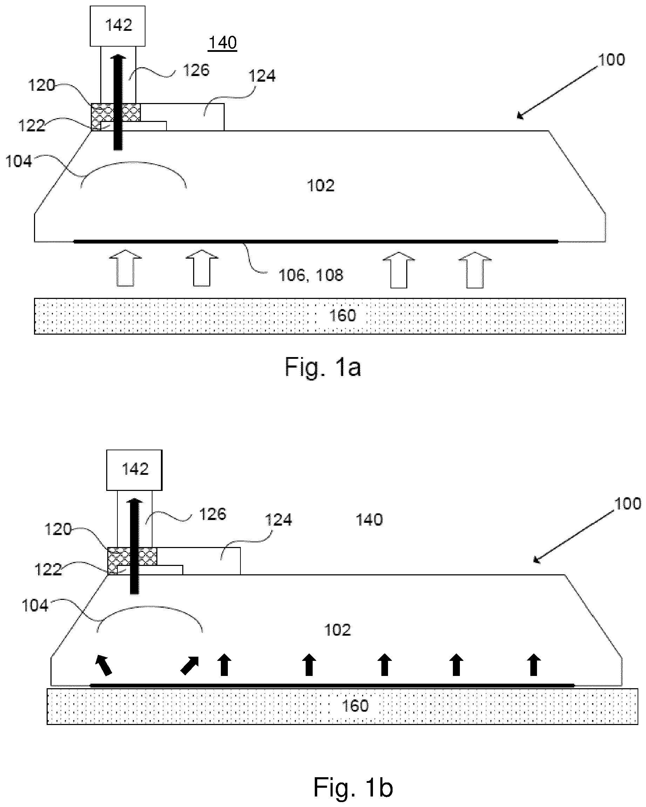

Figs. 1a and 1b illustrates a gripping device 100 having a gripper chamber 102. The gripper chamber 102 has a gripper opening 106 on the face which is directed towards the material 160 when in use. A grid 108 is at least partly covering the gripper opening 106.

Further, the gripper 100 comprises a valve opening 122 in fluid connection to a valve 120. The valve opening 122 is arranged at or in fluid connection with the gripper chamber 102. The valve 120 is further in fluid connection to a connection 126 to a pressure source 142. The pressure source 142 provides a source underpressure. The valve 120 has further a fluid connection to a connection 124 to surrounding environment 140 having a surrounding pressure. In a gripping state, as illustrated in figs. 1a and 1b, the valve 120 is configured so that the valve opening 122 is in fluid connection to the pressure source 142. The pressure source 142 is generating a source pressure which is lower than the surrounding pressure of the surrounding environment 140.

A distribution member 104 is arranged in the gripper chamber 102 and it distributes the source pressure in the gripper chamber along the gripper opening. The distribution member 104 in the illustrated embodiment is circular dome shaped. The bottom of the dome shape is facing the gripper opening 106 of the gripper chamber 102. The distribution member 104 is arranged at the valve opening 122 such that the source pressure is effectively distributed in the gripper chamber 102.

As the gripper chamber 102 is exposed to the source underpressure, a pressure difference between the surrounding pressure and the source pressure is created. Through the pressure difference the material 160 is gripped to the gripper opening 106 as illustrated in fig. 1b. The gripping device 100 is arranged such that the material 160 is arranged at the gripper opening 106 before the underpressure from the pressure source 142 is applied. However, the material 160 is not able to enter the gripper chamber 102 as the grid 108 is placed within the gripper opening. Through the constant sucking originating from the pressure source 142 the material 160 is held at the grating. The material 160 attaches evenly to the grating 108 since through the distribution member 104 a homogenous pressure is generated.

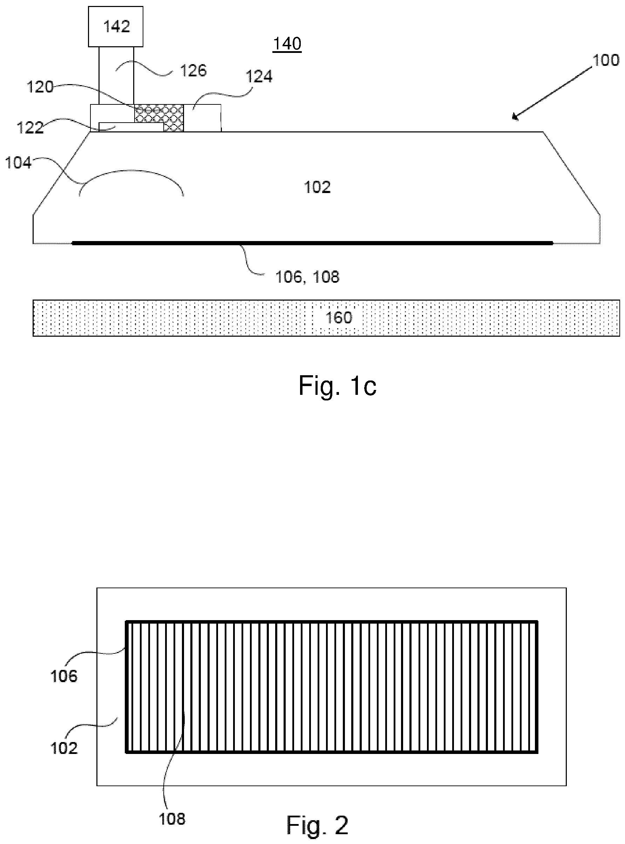

Fig. 1c illustrates a gripping device 100 as described for Fig. 1a, with the valve 120 in an open state, i.e. the valve opening 122 is in fluid connection with the surrounding environment 140. Hence, the surrounding pressure enters the connection 124, the valve, 120, the valve opening 122, and the gripper chamber 102. Thereby the pressure difference between the surrounding environment 140 and the source pressure generated by the pressure source 142 is removed and hence no under pressure force is applied to the material 160. This means that any material 160 held by the pressure difference is released from the gripper 100. The arrangement of the valve 120 provides a fast and gentle release of the material 160.

When the valve 120 moves from the gripping state to the open state, the valve may rotate or move linearly to change state. The valve 120 is configured such that in the gripping state, a fluid connection between the valve opening 122 and the pressure source 142 is provided at the same time as any fluid connection between the valve opening 122 and the surrounding environment 140 is prevented. In the open state, the valve 120 is configured such that a fluid connection between the valve opening 122 and the surrounding environment 140 is provided at the same time as any fluid connection between the valve opening 122 and the pressure source 142 is prevented.

Fig. 2 illustrates the grating 108 covering at least a portion of the gripper opening 106 of the gripper chamber 102. The grating is adapted according to the kind of material 160 that is to be gripped with the gripping device 100. This means that the material and the porosity of the grating can be changed.

In the drawings and specification, there have been disclosed preferred embodiments and examples of the invention and, although specific terms are employed, they are used in a generic and descriptive sense only and not for the purpose of limitation, the scope of the invention being set forth in the following claims.

### Reference list

- 100: gripping device
- 102: gripper chamber
- 104: distribution member
- 106: gripper opening
- 108: grating

- 120: valve
- 122: valve opening
- 124: connection to surrounding environment
- 126: connection to pressure source

- 140: surrounding environment
- 142: pressure source

- 160: material

## Claims

1. A gripping device (100) for gripping a material (160), the gripping device (100) comprising
a gripper chamber (102) having a gripper opening (106) configured to face the material (160) when in use, and a valve opening (122),
a grating (108) covering at least a portion of the gripper opening (106),
a valve (120) arranged at or in fluid connection with the valve opening (122) of the gripper chamber (102) and comprises a connection (126) to a pressure source (142) and a connection (124) to a surrounding environment (140) having a surrounding pressure, wherein the valve (120) is configured to, in an open state, connect the valve opening (122) to the surrounding environment (140), and in a gripping state, connect to the valve opening (122) to the pressure source (142), wherein the pressure source is configured to provide a source underpressure in the gripping chamber when the valve is in the gripping state.

2. The gripping device (100) according to claim 1, further comprising a distribution member (104) arranged in the gripper chamber (102) and configured to distribute a pressure in the gripper chamber (102) along the gripper opening (106).

3. The gripping device (100) according to claim 1 or 2, wherein a pressure difference between the source underpressure and the surrounding pressure is lower than 0.5 bar.

4. The gripping device (100) according to any of the claims 1-3, wherein the valve (120) arranged at or in fluid connection with the valve opening (122) of the gripper chamber (102) further comprises a connection to a second pressure source having a second source pressure, wherein the valve is configured to, in a cleaning state, connect to the valve opening (122) to the second pressure source, and
wherein the distribution member (104) is further configured to distribute the second source pressure in the gripper chamber (102) along the gripper opening (106) wherein the second source pressure is higher than the surrounding pressure of the surrounding environment (140) in the gripper chamber (102).

5. The gripping device (100) according to any of the preceding claims, wherein the pressure source (142) generates the source underpressure by use of a fan or vacuum device.

6. The gripping device (100) according to any of the preceding claims, wherein the distribution member (104) is configured to provide homogenous pressure over at least an area of the grating (108).

7. The gripping device (100) according to any of the preceding claims, wherein the distribution member (104) is dome shaped

8. The gripping device (100) according to any of the preceding claims, wherein the grating (108) is covering at least 90% of the gripper opening (106) or preferably 100% of the gripper opening.

9. The gripping device (100) according to any of the preceding claims, wherein the grating (108) is formed by a wire mesh or a plate with holes.

10. The gripping device (100) according to any of the preceding claims, wherein the pressure source (142) is configured to provide a continuous underpressure when gripping a material (160).

11. The gripping device (100) according to any of the preceding claims, wherein the valve opening (122) is positioned in direct connection to the gripper chamber (102).

12. A method for gripping a material (160), the method comprising:
providing a gripping device (100) having a gripper chamber (102) with a gripper opening (106) configured to face the material (160),
bringing the gripper opening (106) in contact with the material (160) for gripping the material (160),
gripping the material by changing state of a valve (120) arranged at or in fluid connection with a valve opening (122) of the gripper chamber (102) from an open state to a gripping state, in which gripping state the valve is connected to a pressure source (142) providing a source underpressure in the gripper chamber, and
releasing the material by changing the state of the valve (120) the open state, in which open state the valve opening of the gripper chamber is in fluid connection with a surrounding environment (140) having a surrounding pressure.

13. The method according to claim 12, wherein a pressure difference between the source underpressure and the surrounding pressure is below 0.5 bar.

14. The method according to claim 12 or 13, wherein the source underpressure is provided continuously when gripping the material (160).

15. The method according to any of the claims 12-14, further comprising a step of distributing the source underpressure in the gripper chamber (102) along the gripper opening (106) using a distribution member (104) arranged in the gripper chamber.
